# EUROPÄISCHE PATENTSCHRIFT

(11) **EP 3 543 068 B1**
(45) Veröffentlichungstag und Bekanntmachung des Hinweises auf die Patenterteilung: **11.11.2020**
(21) Anmeldenummer: 19020091.5
(22) Anmeldetag: 27.02.2019
(51) Int. Cl.: B60N 2/865, B60N 2/809, B60N 2/90

(54) **KOPFSTÜTZE**
HEADREST
APPUIE-TÊTE

(30) Priorität: 21.03.2018 DE 102018106698
(43) Veröffentlichungstag der Anmeldung: 25.09.2019
(73) Patentinhaber: GRAMMER AG, 92224 Amberg (DE)
(72) Erfinder: Nuss, Ralph, 92284 Poppenricht (DE); Delling, Gerhard, 92546 Schmidgaden (DE); Himmelhuber, Erwin, 92237 Sulzbach (DE); Bösl, Manuel, 92272 Freudenberg (DE); Keller, Hubert, 92245 Kümmersbruck (DE)
(74) Vertreter: Roche, von Westernhagen & Ehresmann

(56) Entgegenhaltungen:
- WO-A1-2017/111310
- DE-A1-102015 206 956
- US-B2- 8 616 633

## Beschreibung

Die Erfindung betrifft eine Kopfstütze, insbesondere für einen Fahrzeugsitz, mit Viergelenk-Lagerung.

Eine solche Kopfstütze ist bekannt aus der DE 10 2010 007 942 A1. Die Kopfstütze umfasst eine Haltevorrichtung, mit welcher eine Kopfanlage an einem Fahrzeugsitz lagerbar ist. Zwischen der Kopfanlage und der Haltevorrichtung ist ein Viergelenk angeordnet, mit welchem die Kopfanlage zwischen einer vorderen Position und einer hinteren Position bewegbar ist.

Die Kopfanlage ist bei der Bewegung zwischen der vorderen Position und der hinteren Position in unterschiedlichen Positionen verriegelbar. Dafür sind die Lenker des Viergelenks kreisabschnittförmig geformt und umfassen an einem Endbereich eine Verzahnung mit welcher zur Verriegelung der Kopfanlage ein an der Haltevorrichtung schwenkbar gelagerter Hebel formschlüssig lösbar in Eingriff gebracht werden kann.

WO 2017/111310 A1 betrifft eine Kopfstütze mit einer Haltevorrichtung und einem Kopfanlageteil, wobei das Kopfanlageteil mittels eines ersten Lenkerpaares und mittels eines zweiten Lenkerpaares an der Haltevorrichtung bewegbar gelagert ist. Das Kopfanlageteil ist mittels einer Verriegelungsvorrichtung in unterschiedlichen Positionen verriegelbar.

DE 10 2015 206 956 A1 betrifft eine Kopfstütze mit einer Haltevorrichtung und einem zwischen einer hinteren Position und einer vorderen Position bewegbarem Kopfanlageteil. Das Kopfanlageteil ist mittels eines ersten Lenkerpaares sowie eines zweiten Lenkerpaares an der Haltevorrichtung gelagert, wobei die Lenker Schwenkgelenke mit der Haltevorrichtung und mit dem Kopfanlageteil bilden. Die Verstellung erfogt mittels eines Stellgliedes 94, umfassend einen Elektromotor 156.

Es war Aufgabe der Erfindung eine Kopfstütze mit einem Viergelenk zu schaffen, die einen geringen Bauraum erfordert und lateral betrachtet optisch, insbesondere im Bereich der Haltevorrichtung, schmalbauend ist.

Die Aufgabe wurde gelöst durch eine Kopfstütze mit den Merkmalen des Anspruchs 1.

Die Kopfstütze ist für einen Sitz, insbesondere für einen Fahrzeugsitz, vorgesehen. Sie ist mit einer Kopfanlage sowie mit einer Haltevorrichtung zur Lagerung der Kopfstütze an einer Struktur des Fahrzeugs ausgestattet. Die Struktur des Fahrzeugs kann z.B. ein Fahrzeugsitz, insbesondere die Rückenlehne eines Fahrzeugsitzes sein. Haltevorrichtung kann jede Struktur sein, mit welcher eine Befestigung an der Fahrzeugstruktur möglich ist. Die Kopfstütze umfasst wenigstens ein Viergelenk zwischen der Kopfanlage und der Haltevorrichtung mittels welcher die Kopfanlage relativ zu der Haltevorrichtung zwischen einer ersten Position und einer zweiten Position bewegbar gelagert ist.

Das Viergelenk umfasst wenigstens zwei Lenker, wobei jeder Lenker wenigstens ein Gelenk mit der Haltevorrichtung und wenigstens ein Gelenk mit der Kopfanlage bildet. Außerdem umfasst diie Kopfstütze wenigstens eine Verriegelungsvorrichtung, die mit der Haltevorrichtung zugeordneten ersten Verriegelungsmitteln und der Kopfanlage zugeordneten zweiten Verriegelungsmitteln versehen ist.

Die ersten Verriegelungsmittel sind fest an der Haltevorrichtung gehalten oder gemäß einer Alternative ist ein oberer Bereich wenigstens eines Lenkers mit den ersten Verriegelungsmitteln versehen. Die zweiten Verriegelungsmittel sind fest an der Kopfanlage gehalten.

Die Haltevorrichtung umfasst z.B. wenigstens eine Tragstange oder einen Tragstangenbügel. Die Tragstange muss nicht im herkömmlichen Sinne eine Stange sein, sie kann z.B. im Sinne der Erfindung auch ein Blech sein. Die Haltevorrichtung kann z.B. ein etwa U-förmiges Blech mit freien Endbereichen umfassen. An den Endbereichen sind z.B. Lenker des Viergelenks angelenkt. Das Blech ist z.B. an wenigstens einer Tragstange oder an einem Tragstangenbügel gelagert, wobei die Tragstange oder der Tragstangenbügel an der Rückenlehne gelagert werden kann. Das Blech kann z.B. auch unmittelbar an der Rückenlehne gehalten sein. Alternativ kann die Haltevorrichtung z.B. auch einfach von einer Grundplatte gebildet sein, die an der Lehnenstruktur befestigbar ist. Die Haltevorrichtung bildet z.B. die ersten Verriegelungsmittel aus.

Die Kopfanlage umfasst z.B. einen Halter. Der Halter bildet z.B. die Gelenke zwischen den Lenkern des Viergelenks und der Kopfanlage aus. Der Halter ist z.B. einteilig mit einer Kopfanlageplatte verbunden oder als separates Teil ausgebildet. In letzterem Fall kann die Kopfanlageplatte relativ zu dem Halter bewegbar sein. Der Halter nimmt z.B. einen Teil der Verriegelungsvorrichtung auf.

Gemäß der Erfindung umfasst die Haltevorrichtung wenigstens einen sich über die kopfanlageseitigen Gelenke erstreckenden Vorsprung. Der Vorsprung kann z.B. von einer Tragstange oder einem Tragstangenbügel gebildet sein. Der Vorsprung erstreckt sich z.B. von der Haltevorrichtung etwa vertikal. Mit diesen Merkmalen können die ersten Verriegelungsmittel benachbart den zweiten Verriegelungsmitteln ausgebildet werden. Es muss kein großer Weg zwischen den ersten Verriegelungsmitteln und den zweiten Verriegelungsmitteln überbrückt werden, um diese zwischen der Riegelposition und der Löseposition zu bewegen.

Die ersten Verriegelungsmittel sind dem Vorsprung zugeordnet. Der Vorsprung bildet die ersten Verriegelungsmittel z.B. aus. Z.B. sind die ersten Verriegelungsmittel von einem Bereich des Vorsprungs gebildet oder von einem an dem Vorsprung befestigten Element.

Die zweiten Verriegelungsmittel umfassen z.B. wenigstens einen zwischen der Riegelposition und der Löseposition verlagerbaren Riegel. Der Riegel kann z.B. die Form wenigstens eines Vorsprungs aufweisen, der in eine Aussparung der ersten Verriegelungsmittel eingreift oder wenigstens eine Aussparung umfassen, die formschlüssig lösbar in Eingriff mit einer Struktur der ersten Verriegelungsmittel bewegbar ist.

Der wenigstens eine Riegel ist z.B. von wenigstens einer Zahnschiene gebildet, die mit wenigstens einer Aussparung versehen ist. In diesem Fall kann dann wahlweise eine der Aussparungen lösbar in Eingriff mit den ersten Verriegelungsmitteln bewegbar sein, z.B. mit einem Bereich eines Vorsprungs der Haltevorrichtung, welcher die ersten Verriegelungsmittel bildet.

Einer Ausführungsform gemäß ist die Zahnschiene im Wesentlichen in einer im Wesentlichen horizontalen Ebene zwischen der Riegelposition und der Löseposition verlagerbar, um die Verriegelungsvorrichtung zwischen der Riegelposition und der Löseposition zu bewegen.

Z.B. sind die ersten Verriegelungsmittel von zwei an der Haltevorrichtung umfassten Vorsprüngen und die zweiten Verriegelungsmittel von zwei an der Kopfanlage gelagerten Zahnschienen gebildet.

Die Zahnschiene ist z.B. von einem Riegelelement gebildet. Das Riegelelement ist z.B. translatorisch verlagerbar.

Gemäß einer Ausführungsform sind die Riegel von einer Feder in die Riegelposition belastet und sind entgegen der Kraft der Feder in die Löseposition bewegbar.

Z.B. ist die Verriegelungsvorrichtung benachbart der kopfanlageseitigen Gelenke des Viergelenks angeordnet. Mit diesen Merkmalen werden die auf die Haltevorrichtung wirkenden Hebelkräfte verringert. Z.B. ist die Verriegelungsvorrichtung, insbesondere die zweiten Verriegelungsmittel, oberhalb der kopfanlageseitigen Gelenke des Viergelenks angeordnet.

Zusätzlich zu der Horizontalverstellung der Kopfanlage weist die Kopfstütze z.B. eine Stelleinrichtung für eine vertikale Verstellung der gesamten Kopfanlage oder eines Teils der Kopfanlage auf.

Die vertikale Verstellung der Kopfstütze kann z.B. entsprechend der Kopfstütze gemäß DE 10 2017 007 149 A1 ausgebildet sein, deren Offenbarung vollumfänglich in diese Anmeldung übernommen wird.

Weitere Vorteile ergeben sich anhand eines in den Fig. schematisch dargestellten Ausführungsbeispieles. Es zeigen:
Fig. 1 eine perspektivische Darstellung der Kopfstütze von vorne, wobei sich eine Kopfanlage in der hinteren Position befindet
Fig. 2 eine perspektivische Darstellung der Kopfstütze gemäß Fig. 1 von hinten,
Fig. 3 eine Rückansicht der Kopfstütze gemäß Fig. 1,
Fig. 4 eine Schnittansicht gemäß Schnittlinie A - A in Fig. 3,
Fig. 5 eine Schnittansicht in Anlehnung an Fig. 4, wobei die Kopfanlage in einer zweiten Position angeordnet ist,
Fig. 6 eine Schnittansicht gemäß Schnittlinie B - B in Fig. 3.

Eine Kopfstütze eines Fahrzeugsitzes insgesamt ist in den Fig. mit dem Bezugszeichen 10 bezeichnet. Gleiche Bezugszeichen in den unterschiedlichen Fig. bezeichnen entsprechende Teile, auch wenn kleine Buchstaben nachgestellt oder weggelassen sind.

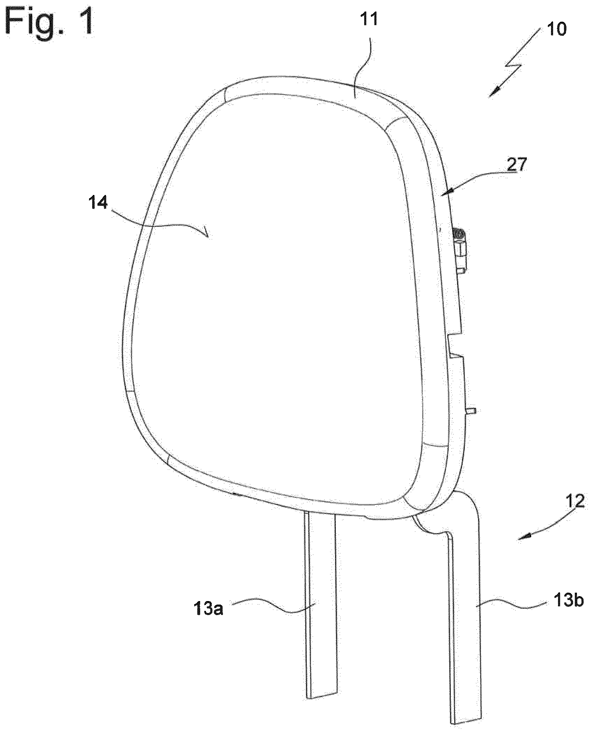

Eine perspektivische Ansicht der Kopfstütze 10 ist in Fig. 1 dargestellt. Die Kopfstütze 10 umfasst eine Kopfanlage 11 sowie eine Haltevorrichtung 12, welche im vorliegenden Ausführungsbeispiel zwei Tragstangen 13a und 13b umfasst. Die Kopfanlage 11 umfasst eine Kopfanlageplatte 27 sowie einen Halter 18, der im vorliegenden Ausführungsbeispiel ein separates Teil ist, alternativ aber auch einteilig mit der Kopfanlageplatte 27 verbunden sein kann. Die Tragstangen 13a und 13b sind zur Stabilisierung mit einer Stange 37 zu einem Tragstangenbügel 38 fest verbunden, die Teil der Haltevorrichtung 12 ist. Die Kopfanlage 11 weist eine Kopfanlagefläche 14 auf, die ein Widerlager für den Kopf des Sitzinsassen bildet.

Untere Enden 15a und 15b der Tragstangen 13a und 13b sind z.B. an der Struktur Rückenlehne eines nicht dargestellten Sitzes befestigbar. Die Kopfanlage 11 ist mittels einer Verstellvorrichtung 40 in unterschiedliche Positionen verstellbar. Die Verstellvorrichtung 40 umfasst eine Viergelenkvorrichtung 23 mit zwei Lenkern 16 und 17. Jeder der Lenker 16 und 17 umfasst Arme 34a und 34b sowie eine Traverse 33, welche die Arme 34a und 34b verbindet. Die Traverse 33 dient bei dem Ausführungsbeispiel im Wesentlichen der Verbesserung der Stabilität. Die Traverse 33 als Verbindung der Arme 34a und 34b könnte aber alternativ auch entfallen.

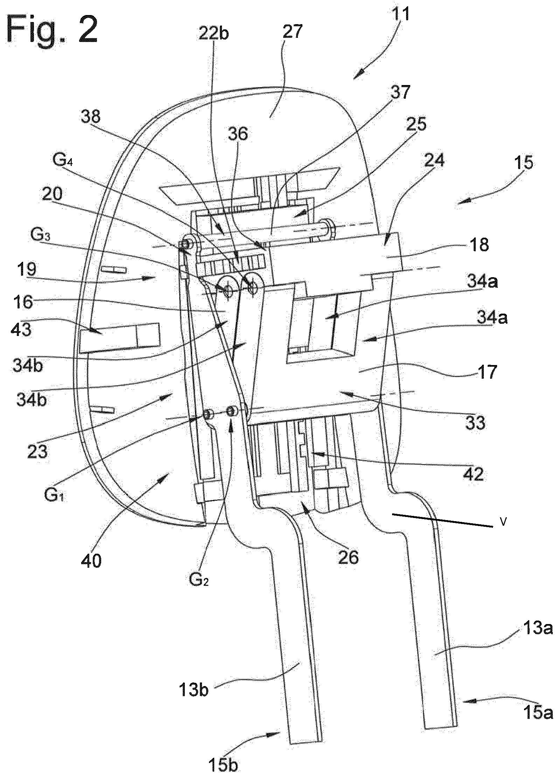

Der Lenker 16 bildet mit der Tragstange 13b ein Gelenk G1 (siehe Fig. 2) und der Lenker 17 bildet mit der Tragstange 13b ein Gelenk G2. Der Lenker 16, insbesondere der Arm 34b des Lenkers 16, bildet außerdem mit der Kopfanlage 11, im vorliegenden Fall mit einem Seitenbereich 35 des Halters 18 der Kopfanlage 11, ein Gelenk G3, während der Lenker 17, insbesondere der Arm 34b des Lenkers 17, mit dem Seitenbereich 35 des Halters 18 ein Gelenk G4 bildet.

In gleicher Weise bilden die Lenker 16 und 17 an einem dem Seitenbereich 35 gegenüberliegenden Seitenbereich 36 jeweils ein Gelenk mit der Tragstange 13a und darüber hinaus jeweils ein Gelenk mit dem Halter 18, was in Fig. 2 nicht erkennbar ist.

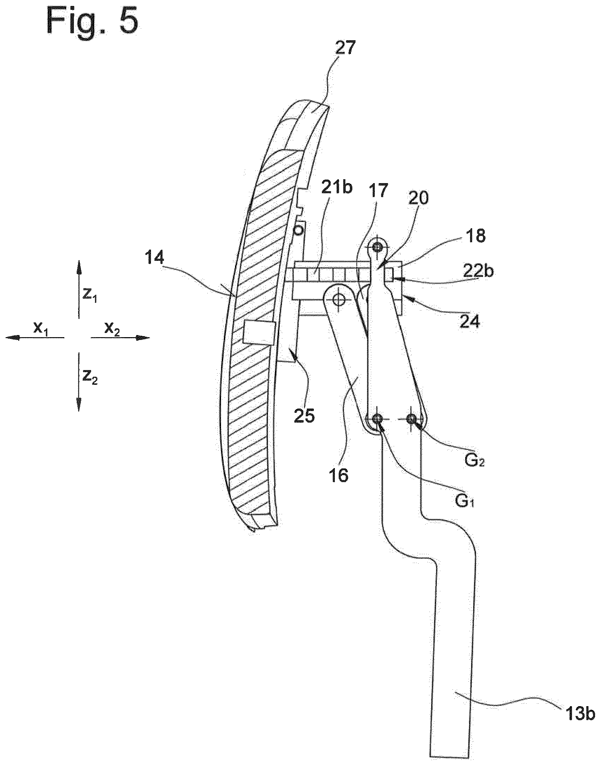

Auf diese Weise ist die Kopfanlage 11 mittels einer Viergelenkvorrichtung 23 umfassend den Tragstangenbügel 38, die Lenker 16 und 17 sowie die Kopfanlage 11 mit dem Halter 18 relativ zu der Haltevorrichtung 12 zwischen einer hinteren Position (siehe die Fig. 2 bis 4) und einer vorderen Position (siehe Fig. 5) in die Richtungen x1 und x2 verlagerbar, wobei die Kopfanlage 11 dabei eine Kurvenbewegung ausführt mit Anteilen einer Bewegung in Z-Richtung und Anteilen einer Bewegung in X-Richtung.

Die Verstellvorrichtung 40 umfasst eine Verriegelungsvorrichtung 19, mit welcher die Kopfanlage 11 in der hinteren Position oder der vorderen Position oder in einer Position zwischen der hinteren Position und der vorderen Position arretierbar ist. Die Verriegelungsvorrichtung 19 umfasst der Kopfanlage 11 zugeordnete erste Verriegelungsmittel und den Tragstangen 13a und 13b zugeordnete zweite Verriegelungsmittel, welche lösbar in Eingriff gebracht werden können.

Im vorliegenden Fall sind die Tragstangen 13a und 13b über die Gelenke G1 und G2 hinaus, insbesondere über die Gelenke G3 und G4 hinaus, in Richtung z1 verlängert und sind mit den zweiten Verriegelungsmitteln in Form eines Riegelbereichs 20 versehen. Der Riegelbereich 20 ist im vorliegenden Ausführungsbeispiel unmittelbar von den Tragstangen 13a und 13b gebildet. Die ersten Verriegelungsmittel sind in Form zweier Riegel 21a und 21b ausgebildet, die relativ zu dem Halter 18 bewegbar sind und jeweils mit einer Zahnstruktur 22a und 22b, in diesem Ausführungsbeispiel in Form einer Zahnschiene, versehen sind. In Fig. 2 ist lediglich die Zahnstruktur 22b erkennbar.

In Fig. 2 ist ebenfalls erkennbar, dass sich die Verriegelungsvorrichtung 19 in einer Riegelposition befindet, d.h., dass die Zahnstruktur 22b mit dem Riegelbereich 20 in Eingriff steht, so dass die Kopfanlage 11 nicht zwischen der hinteren und der vorderen Position bewegbar ist.

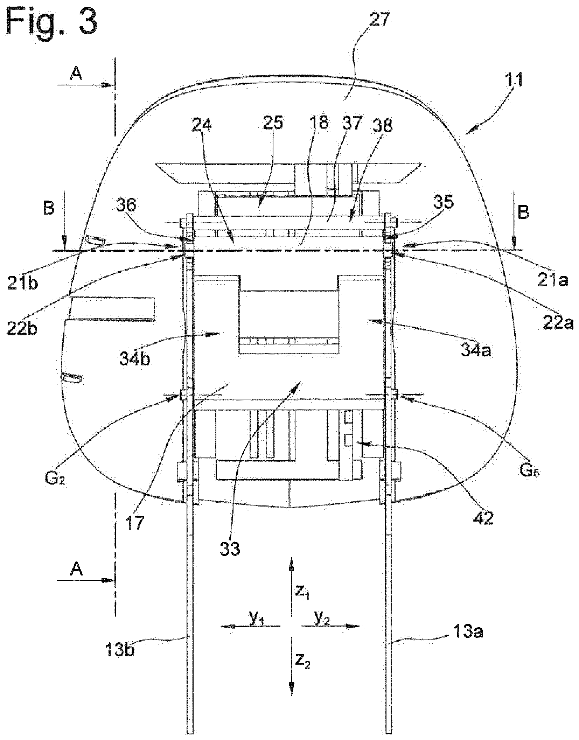

In Fig. 3 ist die gelenkige Verbindung zwischen dem Lenker 17 und der Tragstange 13a in Form eines Gelenks G5 zu erkennen.

Ein hinterer Bereich 24 des Halters 18 umfasst die Zahnstrukturen 22a und 22b, welche sich im Wesentlichen in x-Richtung erstrecken. Ein vorderer Bereich 25 ist mit einer Führungsvorrichtung 26 versehen, um die Kopfanlageplatte 27 in Richtung z1 und z2 zwischen einer oberen Position und einer unteren Position bewegbar zu lagern. Die Kopfanlageplatte 27 kann mit einer Arretiervorrichtung in der oberen Position, der unteren Position und in Zwischenpositionen zwischen der oberen Position und der unteren Position arretiert werden.

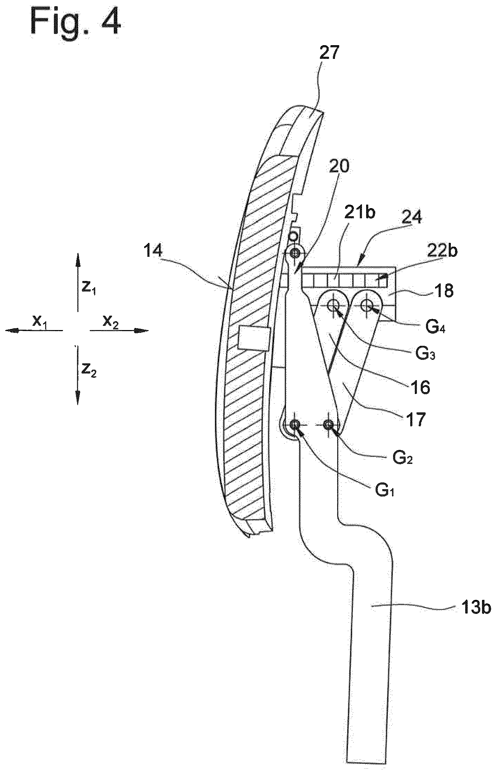

Gemäß Fig. 4 ist die Kopfanlage 11 in der hinteren Position mittels der Verriegelungsvorrichtung 23 verriegelt. Fig. 5 zeigt die Kopfanlage 11 in der vorderen Position verriegelt.

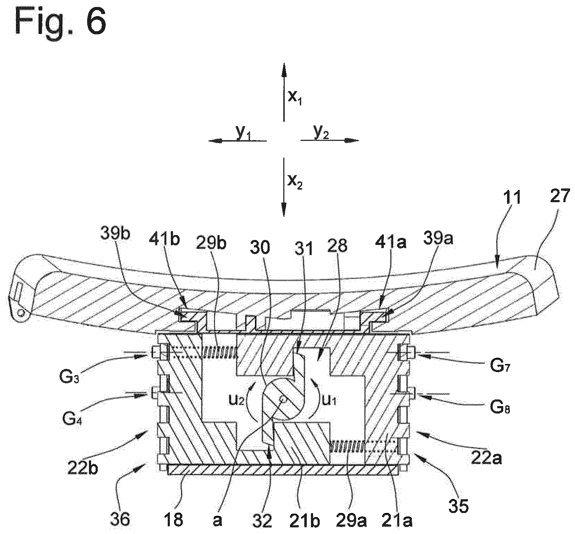

Fig. 6 zeigt eine Schnittansicht, wobei die Riegel 21a und 21b erkennbar sind. In einem Aufnahmeraum 28 des Halters 18 sind die Riegel 21a und 21b bewegbar gelagert. Eine Feder 29a belastet den Riegel 21a in Richtung y2 in die Riegelposition und eine Feder 29b belastet den Riegel 21b in Richtung y1 in die Riegelposition.

Ein Betätigungselement 30 ist um eine Achse a in die Richtungen u1 und u2 schwenkbar gelagert. Das Betätigungselement 30 kann von außen an der Kopfstütze 10 mit einer Taste 43 (lediglich in Fig. 2 bezeichnet) oder alternativ oder zusätzlich elektrisch mit einem Motor betätigt werden. Das Betätigungselement 30 umfasst zwei Arme 31 und 32. Der Arm 31 steht mit dem Riegel 21a in Kontakt und der Arm 32 steht mit dem Riegel 21b in Kontakt.

In der in Fig. 6 dargestellten Grundposition des Betätigungselements 30 befinden sich die Riegel 21a und 21b in der Riegelposition. Wird das Betätigungselement 30 in Richtung u1 geschwenkt, verlagert der Arm 31 den Riegel 21a entgegen der Kraft der Feder 29a in Richtung y1 und der Arm 32 verlagert den Riegel 21b entgegen der Kraft der Feder 29b in Richtung y2 in die Löseposition. In der Löseposition steht der Riegel 21a außer Eingriff mit dem Riegelbereich 20a und der Riegel 21b steht außer Eingriff mit dem Riegelbereich 20b. In der Löseposition kann die Kopfanlage 11 zwischen der hinteren Position und der vorderen Position bewegt werden.

Wird das Betätigungselement 30 entlastet, bewegt die Feder den Riegel 21a in Richtung y2 und die Feder 29b bewegt den Riegel 21b in Richtung y1 in die Riegelposition in Eingriff mit dem jeweiligen Riegelbereich 20a bzw. 20b. Dabei wird das Betätigungselement 30 von den Riegeln 21a und 21b in Richtung u2 in die Grundposition zurückbewegt.

In Fig. 6 sind Hakenförmige Vorsprünge 39a und 39b erkennbar, die an dem vorderen Bereich 25 des Halters 18 ausgebildet sind. In der Kopfanlageplatte 27 sind Nuten 41a und 41b ausgebildet. Der Vorsprung 39a greift in die Nut 41a und der Vorsprung 39b greift in die Nut 41b, um die Kopfanlageplatte 27 relativ zu dem Halter 18 in Richtung z1 und z2 bewegbar zu führen. Die Vorsprünge 39a und 39b sowie die Nuten 41a und 41b sind Teil der Führungsvorrichtung 26. In den Fig. 2 und 3 ist eine Zahnschiene 42 als Teil der Arretiervorrichtung erkennbar, mit welcher ein nicht dargestellter, an dem Halter 18 gelagerter Riegel lösbar in Eingriff gebracht werden kann, um die Kopfanlageplatte 27 in unterschiedlichen Höhenpositionen zu arretieren.

## Patentansprüche

1. Kopfstütze, insbesondere für einen Fahrzeugsitz, mit einer Kopfanlage (11), mit einer Haltevorrichtung (12) zur Lagerung der Kopfstütze (10) an einer festen Struktur, mit wenigstens einem Viergelenk (23) zwischen der Kopfanlage (11) und der Haltevorrichtung (12) mittels welcher die Kopfanlage (11) relativ zu der Haltevorrichtung (12) zwischen einer ersten Position und einer zweiten Position bewegbar gelagert ist, wobei das Viergelenk (23) wenigstens zwei Lenker (16, 17) umfasst, und jeder Lenker (16, 17) wenigstens ein Gelenk (G1A, G2A, G1C, G2C) mit der Haltevorrichtung (12) und wenigstens ein Gelenk (G1B, G2B, G1D, G2D) mit der Kopfanlage (11) bildet, mit einer Verriegelungsvorrichtung (19), mit der Haltevorrichtung (12) zugeordneten ersten Verriegelungsmitteln und der Kopfanlage (11) zugeordneten zweiten Verriegelungsmitteln, wobei die ersten Verriegelungsmittel und die zweiten Verriegelungsmittel in einer Riegelposition in Eingriff stehen und in einer Löseposition außer Eingriff sind, wobei die ersten Verriegelungsmittel fest an der Haltevorrichtung (12) gehalten sind und die zweiten Verriegelungsmittel fest an der Kopfanlage (11) gehalten sind, **dadurch gekennzeichnet, dass** die Haltevorrichtung (12) wenigstens einen sich über die kopfanlageseitigen Gelenke (G1B, G2B, G1D, G2D) erstreckenden Vorsprung (V) umfasst und dass die ersten Verriegelungsmittel dem Vorsprung zugeordnet sind.

2. Kopfstütze nach Anspruch 1, **dadurch gekennzeichnet, dass** die Haltevorrichtung (12) wenigstens eine Tragstange (13a, 13b) oder einen Tragstangenbügel umfasst.

3. Kopfstütze nach einem der vorangehenden Ansprüche, **dadurch gekennzeichnet, dass** die zweiten Verriegelungsmittel wenigstens einen zwischen der Riegelposition und der Löseposition verlagerbaren Riegel (21a, 21b) umfassen.

4. Kopfstütze nach einem der vorangehenden Ansprüche, **dadurch gekennzeichnet, dass** der wenigstens eine Riegel (21a, 21b) von wenigstens einer Zahnstruktur (22a, 22b), insbesondere von einer Zahnschiene, gebildet ist, die mit wenigstens einer Aussparung versehen ist.

5. Kopfstütze nach Anspruch 6, **dadurch gekennzeichnet, dass** die Zahnstruktur im Wesentlichen horizontal zwischen der Riegelposition und der Löseposition verlagerbar ist.

6. Kopfstütze nach einem der vorangehenden Ansprüche, **dadurch gekennzeichnet, dass** die Haltevorrichtung (12) zwei Vorsprünge (V) umfasst und dass zwei parallel angeordnete Zahnstruktur (22a, 22b) vorgesehen sind.

7. Kopfstütze nach Anspruch 4 oder Anspruch 5, **dadurch gekennzeichnet, dass** die Zahnstruktur benachbart der kopfanlageseitigen Gelenke (G1B, G2B, G1D, G2D) des Viergelenks (23) angeordnet sind.

8. Kopfstütze nach einem der vorangehenden Ansprüche, **dadurch gekennzeichnet, dass** die Kopfanlage eine Stelleinrichtung (40) für eine vertikale Verstellung der Kopfanlage (11) oder eines Teils der Kopfanlage (11) aufweist.

## Claims

1. Head rest, in particular for a vehicle seat, with a head contact part (11), with a holding device (12) for mounting the head rest (10) on a fixed structure, with at least one four-joint linkage (23) between the head contact part (11) and the holding device (12), by means of which the head contact part (11) is mounted moveably relative to the holding device (12) between a first position and a second position, wherein the four-joint linkage (23) comprises at least two links (16, 17), and each link (16, 17) forms at least one joint (G1A, G2A, G1C, G2C) with the holding device (12) and at least one joint (G1B, G2B, G1D, G2D) with the head contact part (11), with an interlocking device (19), with first locking means assigned to the holding device (12) and second locking means assigned to the head contact part (12), wherein the first locking means and the second locking means are in engagement in a locked position and are out of engagement in a release position, whereby the first locking means are fixedly held on the holding device (12) and in that the second locking means are fixedly held on the head contact part (11), **characterized in that** the holding device (12) comprises at least one protrusion (V) extending beyond the head contact part sided joints (G1B, G2B, G1D, G2D) and that the first locking means are assigned to the protrusion.

2. Head rest according to claim 1, **characterized in that** the holding device (12) comprises at least one support bar (13a, 13b) or support bar bracket.

3. Head rest according to any one of the preceding claims, **characterized in that** the second locking means comprise at least one lock (21a, 21b) displaceable between the locked position and the release position.

4. Head rest according to any one of the preceding claims, **characterized in that** the at least one lock (21a, 21b) is formed by at least one tooth structure (22a, 22b), in particular by a toothed rack, which is provided with at least one recess.

5. Head rest according to claim 6, **characterized in that** the tooth structure is displaceable essentially horizontally between the locked position and the release position.

6. Head rest according to any one of the preceding claims, **characterized in that** the holding device (12) comprises two protrusions (V), and **in that** two parallelly-arranged tooth structures (22a, 22b) are provided.

7. Head rest according to claim 6 or claim 7, **characterized in that** the tooth structures are arranged adjacent to the joints (G1B, G2B, G1D, G2D) of the four-joint linkage (23) on the side of the head contact part.

8. Head rest according to any one of the preceding claims, **characterized in that** the head contact part comprises an adjustment device (40) for a vertical adjustment of the head contact part (11) or part of the head contact part (11).

## Revendications

1. Appuie-tête, en particulier pour une automobile, avec un support de tête (11), avec un dispositif de maintien (12) pour monter l'appuie-tête (10) sur une structure fixe, avec au moins un quadrilatère articulé (23) entre le support de tête (11) et le dispositif de maintien (12) au moyen duquel le support de tête (11) est monté de façon mobile par rapport au dispositif de maintien (12) entre une première position et une deuxième position, dans lequel le quadrilatère articulé (23) comprend au moins deux bras (16, 17), et chaque bras (16, 17) forme au moins une articulation (G1A, G2A, G1C, G2C) avec le dispositif de maintien (12) et au moins une articulation (G1B, G2B, G1D, G2D) avec le support de tête (11), avec un dispositif de verrouillage (19), et avec des premiers moyens de verrouillage associés avec le dispositif de maintien (12) et des deuxièmes moyens de verrouillage associés avec le support de tête (11), les premiers moyens de verrouillage et les deuxièmes moyens de verrouillage étant accouplés dans une position de verrouillage et étant désaccouplés dans une position de libération, et les premiers moyens de verrouillage étant fixés sur le dispositif de maintien (12) et les deuxièmes moyens de verrouillage étant fixés sur le support de tête (11), **caractérisé en ce que** le dispositif de maintien (12) comporte au moins une saillie (V) s'étendant sur les articulations (G1B, G2B, G1D, G2D) situées du côté du support de tête et que les premiers moyens de verrouillage sont associés à la saillie.

2. Appuie-tête selon la revendication 1, **caractérisé en ce que** le dispositif de maintien (12) comporte au moins une tige de support (13a, 13b) ou un étrier à tige de support.

3. Appuie-tête selon une des revendications précédentes, **caractérisé en ce que** les deuxièmes moyens de verrouillage comportent au moins un verrou (21a, 21b) pouvant se déplacer entre la position de verrouillage et la position de libération.

4. Appuie-tête selon une des revendications précédentes, **caractérisé en ce que** l'au moins un verrou (21a, 21b) est formé par au moins une structure dentée (22a, 22b), en particulier par une crémaillère, qui est dotée d'au moins une encoche.

5. Appuie-tête selon une la revendication 6, **caractérisé en ce que** la structure dentée peut se déplacer sensiblement horizontalement entre la position de verrouillage et la position de libération.

6. Appuie-tête selon une des revendications précédentes, **caractérisé en ce que** le dispositif de maintien (12) comporte deux saillies (V) et que deux structures dentées (22a, 22b) disposées parallèlement sont prévues.

7. Appuie-tête selon la revendication 4 ou la revendication 5, **caractérisé en ce que** les structures dentées sont disposées de façon adjacente aux articulations (G1B, G2B, G1D, G2D) du quadrilatère articulé (23) situées du côté du support de tête.

8. Appuie-tête selon une des revendications précédentes, **caractérisé en ce que** le support de tête possède un dispositif de réglage (40) pour régler verticalement le support de tête (11) ou une partie du support de tête (11).
